# EUROPÄISCHE PATENTANMELDUNG

(11) **EP 1 120 314 A2**
(43) Veröffentlichungstag der Anmeldung: **01.08.2001**
(21) Anmeldenummer: 00250453.8
(22) Anmeldetag: 22.12.2000
(51) Int. Cl.: B60R 7/04

(54) **Behältnis für ein Fahrzeug**

(30) Priorität: 27.01.2000 DE 10004351
(71) Anmelder: Volkswagen Aktiengesellschaft, 38436 Wolfsburg (DE)
(72) Erfinder: König, Roger Dipl.-Ing, 38124 Braunschweig (DE); Schwarzkopf, Bernd, 91207 Lauf/Schönberg (DE)
(74) Vertreter: Cohausz & Florack

(57) **Zusammenfassung**

Die Erfindung betrifft ein Behältnis (1) für ein Fahrzeug zur Aufnahme eines oder mehrerer im wesentlichen rechteckiger Gegenstände (3), insbesondere einer oder mehrerer Chipkarten oder Magnetstreifenkarten, mit einem offenen Gehäuse (4) und einem in das Gehäuse eingesetzten Halteelement (5). Um bei kompakter Bauweise eines solchen Behältnisses eine verdeckte Aufbewahrung eines darin aufzunehmenden Gegenstandes (3) sowie eine komfortable Entnahme dieses Gegenstandes zu ermöglichen ist vorgesehen, daß an dem Gehäuse (4) mindestens ein Deckel (8) schwenkbar gelagert ist, der aus einer Schließlage in eine Offenlage und zurück in die Schließlage schwenkbar ist, wobei das Halteelement (5) beweglich in dem Gehäuse (4) gelagert und über einen Mechanismus mit dem Deckel (8) derart gekoppelt ist, daß es beim Öffnen des Deckels (8) in Richtung dessen Schließlage bewegt und beim Schließen des Deckels (8) wieder zurück bewegt wird, und wobei das Halteelement (5) eine Sichtfläche (14) aufweist, die, wenn sich der Deckel (8) in seiner Offenlage befindet, in dessen Schließlage angeordnet ist.

## Beschreibung

Die Erfindung betrifft ein Behältnis für ein Fahrzeug zur Aufnahme eines oder mehrerer im wesentlichen rechteckiger Gegenstände, insbesondere einer oder mehrerer Chipkarten oder Magnetstreifenkarten, mit einem offenen Gehäuse und einem in das Gehäuse eingesetzten Halteelement.

Aus der DE 195 29 876 A1 ist ein Aufsatzteil für eine zwischen einem Fahrersitz und einen Beifahrersitz angeordnete Mittelkonsole eines Kraftfahrzeuges bekannt, das aus einem an der Mittelkonsole befestigbaren offenen Rahmenteil besteht sowie aus mehreren in das Rahmenteil einsetzbaren Haltemitteln zur Halterung von Gegenständen, wie zum Beispiel Münzen, Tonkassetten oder Compact-Disks, gegebenenfalls mit Hülle. Die Anordnung der Haltemittel im Rahmenteil ist dabei innerhalb des von der Rahmenöffnung umgrenzten Bereichs frei wählbar und variabel. Nachteilig bei diesem bekannten Aufsatzteil ist, daß die in den Haltemitteln aufgenommenen Gegenstände zumindest teilweise über das Aufsatzteil hinaus vorstehen, so daß sich die Fahrzeuginsassen hieran gegebenenfalls stoßen oder hieran mit anderen Gegenständen hängenbleiben können. Auch ist es ungünstig, wenn die in den Haltemitteln aufgenommenen Gegenstände stets sichtbar sind, da dies Diebe gegebenenfalls zu einem Diebstahl verleiten kann. Diesem Problem kann zwar dadurch begegnet werden, daß dem Haltemittel eine Abdeckung in Form eines schwenkbaren Deckels zugeordnet wird, jedoch ist die Entnahme eines in dem Haltemittel aufbewahrten Gegenstandes unkomfortabel, wenn die unter bzw. hinter dem Deckel gelegene Zugangsöffnung des Haltemittels aufgrund begrenzter Platzverhältnisse relativ eng ist.

Bekannt ist auch die Aufbewahrung von Chipkarten oder dergleichen in einem Kartenhalter, der an einer Auto-Sonnenblende angeordnet ist (vgl. z.B. DE 197 30 487 A1). Aus solchen Kartenhaltern lassen sich die aufbewahrten Karten zwar relativ komfortabel entnehmen, jedoch werden heute selbst Sonnenblenden auf der Fahrerseite vorzugsweise mit Spiegeln ausgestattet, so daß an solchen Sonnenblenden kaum Platz für eine verdeckte Anordnung eines Kartenhalters verbleibt.

Der vorliegenden Erfindung liegt die Aufgabe zugrunde, ein Behältnis der eingangs genannten Art zu schaffen, das bei kompakter Bauweise eine verdeckte Aufbewahrung eines darin aufzunehmenden Gegenstandes sowie eine komfortable Entnahme dieses Gegenstandes ermöglicht.

Erfindungsgemäß wird diese Aufgabe dadurch gelöst, daß an dem Gehäuse mindestens ein Deckel schwenkbar gelagert ist, der aus einer Schließlage in eine Offenlage und zurück in die Schließlage schwenkbar ist, wobei das Halteelement beweglich in dem Gehäuse gelagert und über einen Mechanismus mit dem Deckel derart gekoppelt ist, daß es beim Öffnen des Deckels in Richtung dessen Schließlage bewegt und beim Schließen des Deckels wieder zurückbewegt wird, und wobei das Halteelement eine Sichtfläche aufweist, die, wenn sich der Deckel in seiner Offenlage befindet, in dessen Schließlage angeordnet ist.

Das Halteelement mit dem darin aufgenommenen Gegenstand befindet sich in der Schließlage des Deckels somit in einer abgesenkten bzw. zurückgefahrenen Stellung, während es in der Offenlage des Deckels in dessen Schließlage angeordnet ist, so daß der aufgenommene Gegenstand leicht und bequem ergriffen werden kann.

Eine bevorzugte Ausgestaltung des erfindungsgemäßen Behältnisses besteht darin, daß der Deckel an dem Gehäuse derart verschwenkbar ist, daß er in seiner vollständigen Offenlage seitlich des Gehäuses angeordnet ist und höchstens mit etwa einem Viertel seiner Außenseite die dann in seiner Schließlage befindliche Sichtfläche des Halteelements überragt. Auf diese Weise wird erreicht, daß der bzw. die in dem Halteelement aufgenommenen Gegenstände auch von der Seite aus, in deren Richtung der Deckel beim Öffnen schwenkt, leicht und bequem ergriffen werden können.

Eine weitere bevorzugte Ausgestaltung besteht darin, daß Hebel auf einer gemeinsamen Drehachse an dem Gehäuse drehbar gelagert sind, deren eines Ende jeweils am Deckel angelenkt ist und deren anderes Ende jeweils einen Zapfen aufweist, wobei die Zapfen in an dem Halteelement ausgebildete Führungen eingreifen, so daß das Halteelement je nach Drehrichtung der Hebel relativ zum Gehäuse bewegt wird. Mit dieser Ausgestaltung läßt sich die erfindungsgemäße Bewegungskopplung von Deckel und Halteelement zuverlässig realisieren.

Eine weitere vorteilhafte Ausgestaltung des erfindungsgemäßen Behältnisses besteht darin, daß die Hebel jeweils mit einer Fugenabdeckung versehen sind, deren Oberseite in der Offenlage des Deckels parallel und auf gleicher Höhe zur Sichtfläche des Halteelements verläuft. Hierdurch kann ein Eindringen von Schmutz oder Kleinteilen in den Bereich zwischen dem Haltemittel und einer das Behältnis umgebenden Verkleidung weitestgehend verhindert werden.

Nach einer weiteren vorteilhaften Ausgestaltung ist vorgesehen, daß das Halteelement mindestens eine Ausnehmung zur Aufnahme eines im wesentlichen rechteckigen Gegenstände aufweist, die breiter sowie länger als der jeweilige aufzunehmende Gegenstand ist, wobei der Ausnehmung jeweils ein Mitnehmerelement zugeordnet ist, das an dem aufgenommenen Gegenstand derart angreift, daß dieser mit einem Eckabschnitt aus der Ausnehmung herausschwenkt, wenn sich das Halteelement in Richtung der Schließlage des Deckels bewegt. Hierdurch kann eine gute Zugriffsmöglichkeit auf die einzelnen in den Ausnehmungen des Halteelements aufgenommenen Gegenstände erzielt werden. Dies ist insbesondere dann der Fall, wenn das Halteelement mit mehreren nebeneinander angeordneten Ausnehmungen zur Aufnahme jeweils eines im wesentlichen rechteckigen Gegenstandes versehen ist und die Mitnehmerelemente so angeordnet sind, daß mindestens zwei aufgenommene Gegenstände an entgegengesetzten Ecken angehoben werden, wenn sich das Halteelement in Richtung der Schließlage des Deckels bewegt.

Weitere bevorzugte und vorteilhafte Ausgestaltungen des erfindungsgemäßen Behältnisses sind in den Unteransprüchen angegeben.

Nachfolgend wird die Erfindung anhand einer mehrere Ausführungsbeispiele darstellenden Zeichnung näher erläutert. Es zeigen:
- Fig. 1: eine perspektivische Ansicht auf eine erste Ausführungsform eines erfindungsgemäßen Behältnisses mit darin aufgenommenen Karten und Münzen,
- Fig. 2: eine Querschnittsansicht auf das Behältnisses gemäß Fig. 1 mit in Schließlage befindlichem Deckel, wobei das Behältnis in einer Mittelkonsole eines Kraftfahrzeuges montiert ist,
- Fig. 3: eine Querschnittsansicht entsprechend Fig. 2, wobei sich der Deckel in einer Zwischenstellung zwischen der Schließlage und seiner vollständigen Offenlage befindet,
- Fig. 4: eine Querschnittsansicht entsprechend Fig. 2, wobei sich der Deckel in seiner vollständigen Offenlage befindet,
- Fig. 5: eine perspektivische Ansicht auf eine zweite Ausführungsform eines erfindungsgemäßen Behältnisses mit darin aufgenommenen Karten sowie Münzen, und
- Fig. 6: eine Explosionsdarstellung des Behältnisses gemäß Fig. 5.

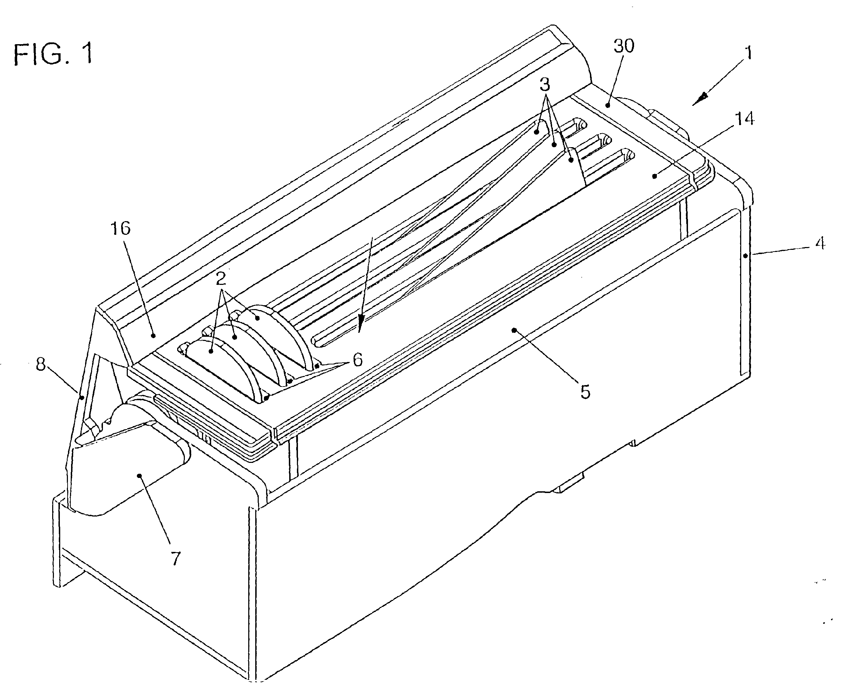

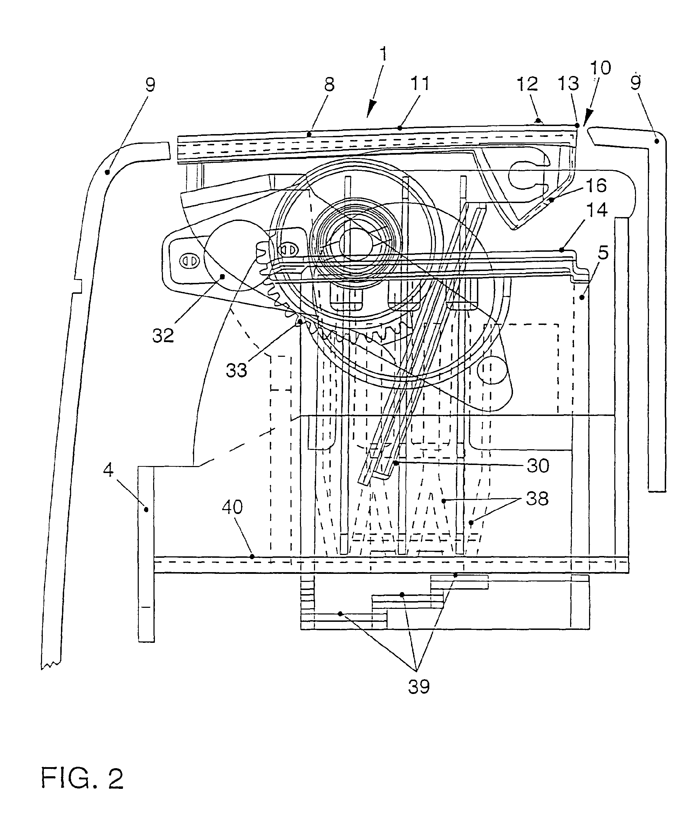

Das in Fig. 1 dargestellte Behältnis 1 ist für den Einbau in einem Fahrzeug bestimmt und dient der Aufbewahrung von Münzen 2 und Karten 3 in Kreditkartenformat. Das Behältnis 1 umfaßt ein zumindest nach oben und zu einer Seite hin offenes Gehäuse 4, in das ein Halteelement 5 eingesetzt ist, das mehrere Ausnehmungen 6 zur Aufnahme von Münzen 2 bzw. Karten 3 aufweist. An den Stirnseiten des Gehäuses 4 ist ein Schwenkarme 7 aufweisender Deckel 8 gelagert, der aus einer Schließlage in die in Fig. 1 gezeigte Offenlage und zurück schwenkbar ist. Das Halteelement 5 ist in dem Gehäuse 4 beweglich gelagert und über einen Mechanismus mit dem Deckel 8 derart gekoppelt, daß es beim Öffnen des Deckels 8 in Richtung dessen Schließlage angehoben und beim Schließen des Deckels 8 wieder abgesenkt wird. Geeignete Mechanismen für diese Bewegungskopplung werden später mit Bezug auf die Figuren 2 bis 4 und 6 erläutert werden.

Das in Fig. 1 gezeigte Behältnis 1 kann beispielsweise in einer zwischen einem Fahrersitz und einen Beifahrersitz angeordneten Mittelkonsole 9 montiert werden, wie es in den Fig. 2 bis 4 gezeigt ist. Die Mittelkonsole 9 weist dabei eine Öffnung 10 auf, die etwas größer als der im wesentlichen rechteckförmige Deckel 8 des Behältnisses 1 ist. Das Behältnis 1 ist in der Mittelkonsole 9 so angeordnet, daß in der Schließlage des Deckels 8 dessen Außenseite 11 im wesentlichen bündig mit der Oberseite der Mittelkonsole 9 abschließt (vgl. Fig. 2).

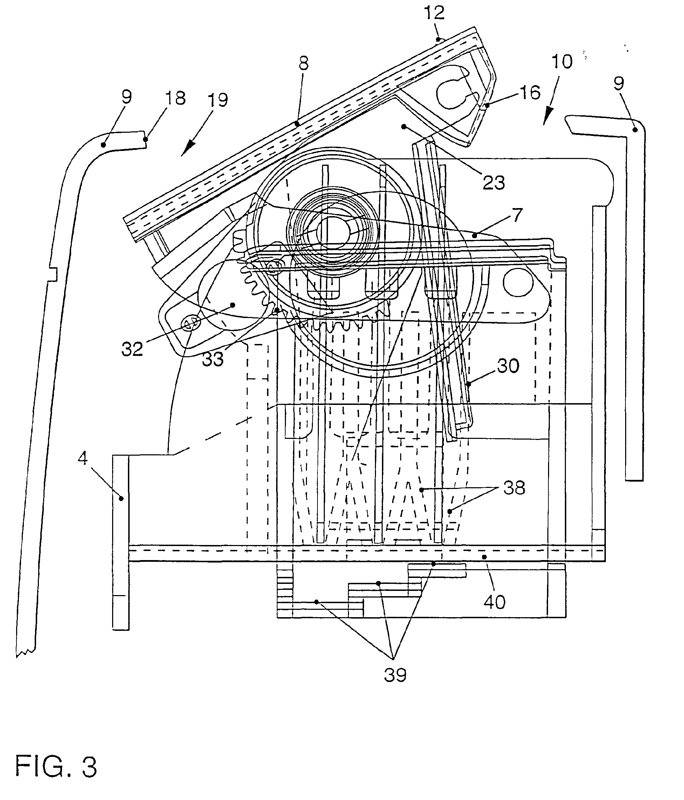

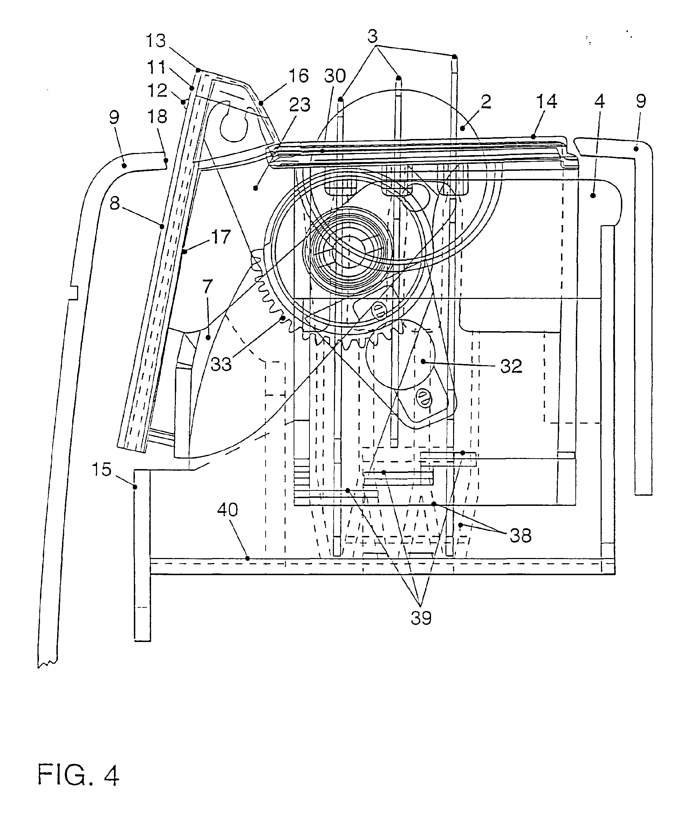

Der Deckel 8 ist mittels einer oder mehrerer Federn in Richtung seiner Offenlage vorgespannt und mit einem Rastmechanismus gekoppelt, der ihn in der Schließlage gegen die Federkraft sichert. An der Außenseite 11 des Deckels 8 sind mehrere relativ kleine Erhebungen 12 vorhanden, die in einer Reihe nahe der der Basis der Schwenkarme 7 abgewandeten Längsseite 13 des Deckels 8 angeordnet sind. Der Deckel 8 wird entrastet, indem er im Bereich seiner Erhebungen 12 um einen bestimmten Betrag niedergedrückt und daraufhin losgelassen wird. Infolge der Federkraft schwenkt der Deckel 8 dann selbsttätig in seine in Fig. 4 gezeigte Offenlage. Fig. 3 zeigt eine Zwischenlage des Deckels 8 zwischen seiner Schließlage und Offenlage.

Während der Schwenkbewegung des Deckels 8 in die Offenlage wird gleichzeichtig das Halteelement 5 angehoben. Hat der Deckel 8 seine vollständige Offenlage erreicht, so ist die im wesentlichen ebene Sichtfläche 14 des Halteelements 5 soweit angehoben, daß sie mit der Oberseite der Mittelkonsole 9 im wesentlichen bündig abschließt. Die Sichtfläche 14 des Halteelements 5 ist somit dann in der Schließlage der Deckelaußenseite angeordnet. Während der Schwenkbewegung taucht der Deckel 8 an der teilweise offenen Längsseite 15 des Gehäuses 4 bis zu etwa ¾ in die umgebende Mittelkonsole 9 ein. In der Offenlage des Deckels 8 überragt somit lediglich etwa ein Viertel seiner Außenseite 11 die dann in seiner Schließlage befindliche Sichtfläche 14 des Halteelements 5.

Wie in den Figuren 1 bis 4 zu erkennen ist, weist der Deckel 8 an seiner den kleinen oberseitigen Erhebungen 12 benachbarten Längsseite 13 einen verlängerten, von der Unterseite des Deckels 8 vorstehenden Kantenbereich 16 auf, der in der Schließlage des Deckels 8 innerhalb der Mittelkonsole 9 bzw. teilweise innerhalb des Gehäuses 4 aufgenommen ist. In der Offenlage liegt die Sichtfläche 14 des Halteelements 5 am unteren Rand des Deckelkantenbereiches 16 an. Der Kantenbereich 16 des Deckels 8 bildet somit einen Anschlag, der die Hubbewegung des Halteelements 5 begrenzt (vgl. Fig. 4). Zugleich dient der Deckelkantenbereich 16 in der Offenlage des Deckels 8 als Abdeckung des zwischen der Sichtfläche 14 des Halteelements 5 und der Deckelunterseite 17 gelegenen Bereiches, während die Deckeloberseite 11 sich dann relativ dicht an der Längsseite 18 der Mittelkonsolenöffnung befindet und den dort während der Schwenkbewegung des Deckels 8 vorhandenen Spalt (vgl. Fig. 3) weitestgehend verschließt.

Nachfolgend wird nun ein bevorzugter Mechanismus für die Bewegungskopplung von Deckel 8 und Halteelement 5 erläutert, wobei funktionsgleiche Teile der beiden Ausführungsformen mit den gleichen Bezugszeichen genannt sind.

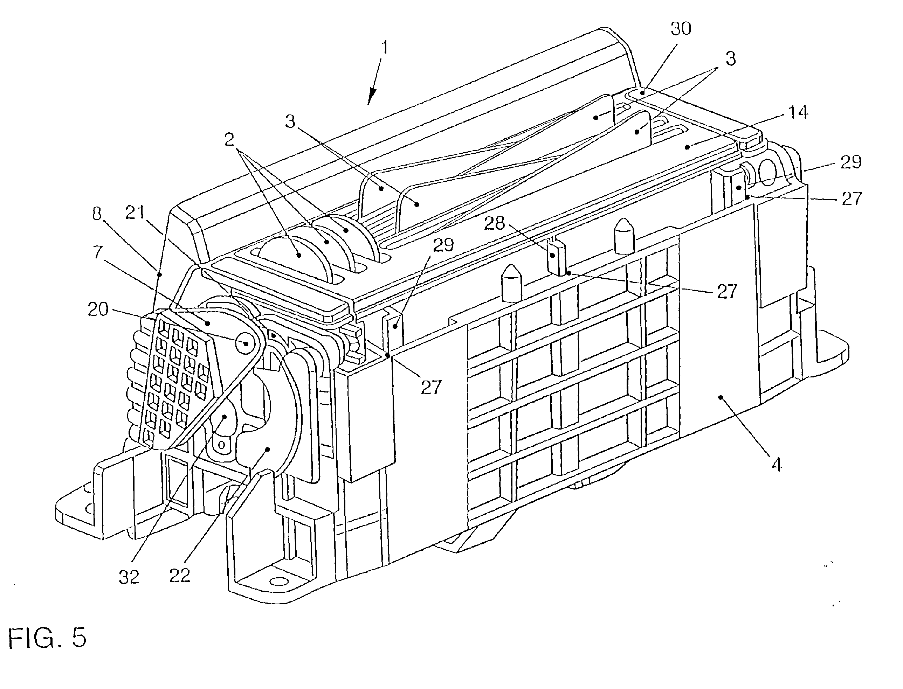

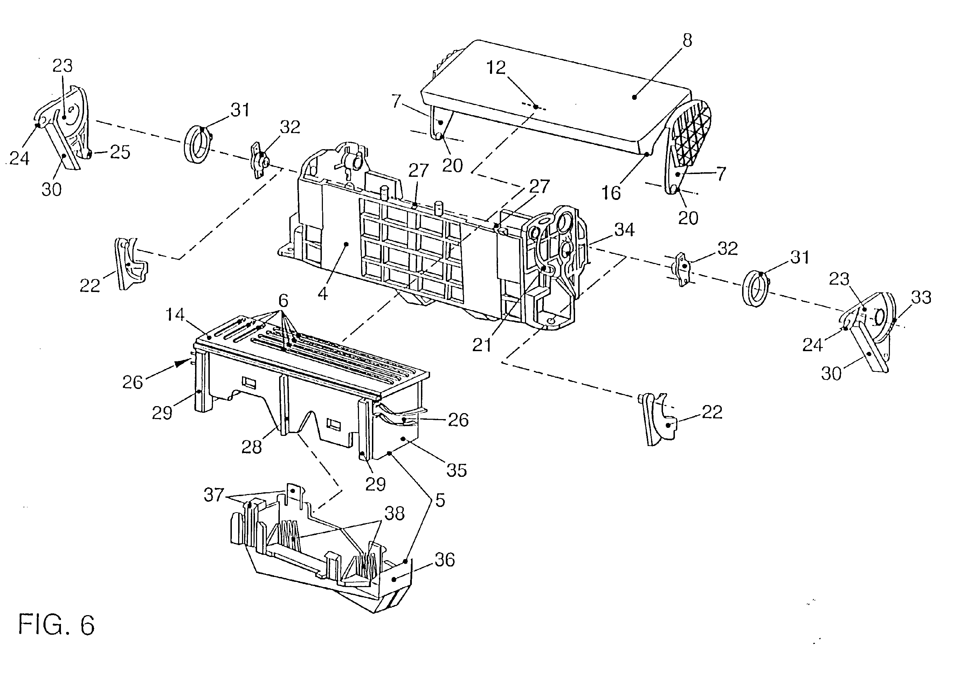

Wie in den Figuren 5 und 6 zu erkennen ist, weisen die mit dem Deckel 8 verbundenen Schwenkarme 7 an ihren Enden miteinander fluchtende Zapfen 20 auf, die jeweils mit einem ersten Ende in eine in dem Gehäuse 4 ausgebildete bogenförmige Führung 21 und mit einem zweiten Ende in eine an dem Gehäuse 4 schwenkbar angeordnete herzkurvenförmige Führung 22 eingreifen. An den Stirnseiten des Gehäuses 4 sind ferner auf einer gemeinsamen Drehachse Hebel 23 gelagert, deren eines Ende 24 jeweils am Deckel 8 im Bereich des an der Deckelunterseite vorstehenden Kantenbereichs 16 angelenkt ist und deren anderes Ende jeweils einen Zapfen 25 aufweist, wobei die Zapfen 25 in an dem Halteelement 5 ausgebildete kurvenförmige Führungen 26 eingreifen, so daß das Halteelement 5 je nach Drehrichtung der Hebel 23 relativ zum Gehäuse 4 angehoben bzw. abgesenkt wird (vgl. auch Figuren 2 bis 4). Das Halteelement 5 ist hierzu in Gleitführungen des Gehäuses 4 verschiebbar gelagert. Die Gleitführungen bestehen aus geradlinigen, zueinander parallel verlaufenden, in der Innenwandung des Gehäuses 4 ausgebildeten Nuten 27, in denen am Halteelement 5 ausgebildete Stege 28, 29 geführt sind. Die an den Ecken des Halteelements 5 angeordneten Stege 29 weisen dabei einen winkelförmigen Querschnitt auf.

Die am Gehäuse 4 drehbar gelagerten Hebel 23 sind jeweils mit einer Fugenabdeckung 30 versehen, deren Oberseite in der Offenlage des Deckels 8 parallel und auf gleicher Höhe zur Sichtfläche 14 des Halteelements 5 verläuft. In der Offenlage des Deckels 8 ist somit im Bereich der Öffnung 10 der Mittelkonsole 9 eine im wesentlichen geschlossene Ebene vorhanden.

Zur Verlangsamung der durch Federn 31 bewirkten selbsttätigen Öffnungsbewegung des Deckels 8 sind Siliconbremsen 32 vorgesehen, die jeweils mit einem Verzahnungssegment 33 kämmen. Die Verzahnungssegmente 33 können dabei, wie in Fig. 6 zu erkennen, an den die Fugenabdeckungen 30 aufweisenden Hebeln 23 ausgebildet sein, wobei die jeweilige Silikonbremse 32, die auch als Viskobremse bezeichnet wird, in einer Ausnehmung 34 des Gehäuses 4 ortsfest montiert ist. Alternativ ist es auch möglich, die Siliconbremsen 32 an den die Fugenabdeckungen 30 aufweisenden Hebeln 23 anzubringen und die Verzahnungssegmente 33 ortsfest am Gehäuse 4 vorzusehen. Letzteres ist in dem Ausführungsbeispiel gemäß den Figuren 2 bis 4 gezeigt.

Wie in Fig. 6 dargestellt, kann das Halteelement 5 zweiteilig ausgeführt sein, und zwar kann es aus einem Oberteil 35 bestehen, welches die der Aufnahme von Münzen bzw. Karten dienenden schlitzförmigen Ausnehmungen 6, die geradlinigen Führungsstege 28, 29 sowie die kurvenförmigen Führungsbahnen 26 aufweist, und aus einem damit verrastbaren Unterteil 36, welches elastische Einrastelemente 37, den Ausnehmungen für die Karten zugeordnete Mitnehmerelemente und aufeinander zulaufende Führungselemente 38 zur Ausrichtung der Karten in den Ausnehmungen 6 aufweist.

Die parallel zueinander verlaufenden Ausnehmungen 6 sind jeweils breiter sowie länger als die darin aufgenommenen Karten 3. Zwischen den Führungselementen 38 ist jeweils eine Öffnung zu einer tieferliegenden Anschlagfläche des Gehäuses 4 vorhanden. Diese Öffnung ist kürzer als die jeweilige Karte 3, so daß die Karte in der jeweiligen Ausnehmung 6 einseitig und außermittig abgestützt ist. Diese einseitige, außermittige Abstützung bewirkt, daß die jeweilige Karte 3 mit einem Eckabschnitt aus der Ausnehmung 6 herausschwenkt, wenn das Halteelement 5 während der Öffnungsbewegung des Deckels 8 angehoben wird. Der andere Eckabschnitt der jeweiligen Karte 3 ist dabei auf der tiefliegenden Anschlagfläche des Gehäuses 4 abgestützt. Wird der Deckel 8 wieder geschlossen und damit das Halteelement 5 abgesenkt, so fallen alle Karten 3 in die gleiche horizontale Lage zurück.

Bei dem in den Figuren 1 bis 4 gezeigten Ausführungsbeispiel werden alle Karten 3 während der Öffnungsbewegung des Deckels 8 vom Halteelement 5 an derselben Seite angehoben, jedoch um unterschiedliche Beträge, so daß die dann aus den Ausnehmungen 6 vorstehenden Kartenecken bezüglich der Höhe sowie des Abstandes zur Stirnseite des Halteelements 5 gestaffelt angeordnet sind (vgl. hierzu insbesondere Figuren 1 und 4). In den Figuren 2 bis 4 ist zu erkennen, daß das Halteelement 5 treppenförmig angeordnete Mitnehmerelemente 39 aufweist, die innerhalb einer im Gehäuse 4 ausgebildeten Öffnung heb- und senkbar sind und jeweils außermittig an der zugeordneten Karte 3 angreifen. Ferner ist zu erkennen, daß das Gehäuse 4 mit einer feststehenden Anschlagfläche 40 sowie mit feststehenden, aufeinander zulaufenden Führungselemente 38 zur Ausrichtung der Karten 3 versehen ist.

Bei dem in den Figuren 5 und 6 gezeigten Ausführungsbeispiel des erfindungsgemäßen Behältnisses werden die Karten 3 dagegen während der Öffnungsbewegung des Deckels 8 vom Halteelement 5 an entgegengesetzten Ecken um im wesentlichen den gleichen Betrag angehoben.

Die Flächen der Ausnehmungen 6 bzw. Führungselemente 38, die mit den eingesteckten Karten 3 bzw. den Münzen 2 in Berührung kommen, sind vorzugsweise mit einer Weichkomponenten-Oberfläche versehen. Hierdurch werden von den Karten bzw. Münzen während des Fahrbetriebs ausgehende Klappergeräusche vermieden bzw. gedämpft.

### BEZUGSZEICHENLISTE

- 1: Behältnis
- 2: Münze
- 3: Karte
- 4: Gehäuse
- 5: Halteelement
- 6: Ausnehmung
- 7: Schwenkarm
- 8: Deckel
- 9: Mittelkonsole
- 10: Öffnung
- 11: Deckelaußenseite
- 12: Erhebungen
- 13: Deckellängsseite
- 14: Halteelementsichtfläche
- 15: Gehäuselängsseite
- 16: Deckelkantenbereich
- 17: Deckelunterseite
- 18: Öffnungslängsseite
- 19: Spalt
- 20: Zapfen
- 21: bogenförmige Führung
- 22: herzkurvenförmige Führung
- 23: Hebel
- 24: Hebelende
- 25: Zapfen
- 26: kurvenförmige Führung
- 27: Führungsnut
- 28: Führungssteg
- 29: Führungssteg
- 30: Fugenabdeckung
- 31: Feder
- 32: Siliconbremse
- 33: Verzahnungssegment
- 34: Gehäuseausnehmung
- 35: Halteelementoberteil
- 36: Halteelementunterteil
- 37: Einrastelemente
- 38: Führungselemente
- 39: Mitnehmerelemente
- 40: Anschlagfläche

## Patentansprüche

1. Behältnis für ein Fahrzeug zur Aufnahme eines oder mehrerer im wesentlichen rechteckiger Gegenstände (3), insbesondere einer oder mehrerer Chipkarten oder Magnetstreifenkarten, mit einem offenen Gehäuse (4) und einem in das Gehäuse eingesetzten Halteelement (5), **dadurch gekennzeichnet,** daß an dem Gehäuse (4) mindestens ein Deckel (8) schwenkbar gelagert ist, der aus einer Schließlage in eine Offenlage und zurück in die Schließlage schwenkbar ist, wobei das Halteelement (5) beweglich in dem Gehäuse (4) gelagert und über einen Mechanismus mit dem Deckel (8) derart gekoppelt ist, daß es beim Öffnen des Deckels (8) in Richtung dessen Schließlage bewegt und beim Schließen des Deckels (8) wieder zurück bewegt wird, und wobei das Halteelement (5) eine Sichtfläche (14) aufweist, die, wenn sich der Deckel (8) in seiner Offenlage befindet, in dessen Schließlage angeordnet ist.

2. Behältnis nach Anspruch 1, **dadurch gekennzeichnet**, daß der Deckel (8) gegen die Kraft einer Feder (31) in die Schließlage überführbar und in dieser rastbar ist und sich nach Entrastung infolge der Federkraft automatisch in die Offenlage bewegt.

3. Behältnis nach Anspruch 1 oder 2, **dadurch gekennzeichnet,** daß der Deckel (8) mit Schwenkarmen (7) versehen ist, an deren Enden miteinander fluchtende Zapfen (20) angeordnet sind, die jeweils mit einem ersten Ende in eine in dem Gehäuse (4) ausgebildete bogenförmige Führung (21) und mit einem zweiten Ende in eine an dem Gehäuse (4) schwenkbar angeordnete herzkurvenförmige Führung (22) eingreifen.

4. Behältnis nach einem der Ansprüche 1 bis 3, **dadurch gekennzeichnet**, daß der Deckel (8) an dem Gehäuse (4) derart verschwenkbar ist, daß er in seiner vollständigen Offenlage seitlich des Gehäuses (4) angeordnet ist und höchstens mit etwa einem Viertel seiner Außenseite (11) die dann in seiner Schließlage befindliche Sichtfläche (14) des Halteelements (5) überragt.

5. Behältnis nach einem der Ansprüche 1 bis 4, **dadurch gekennzeichnet**, daß an dem Gehäuse (4) auf einer gemeinsamen Drehachse Hebel (23) drehbar gelagert sind, deren eines Ende (24) jeweils am Deckel (8) angelenkt ist und deren anderes Ende jeweils einen Zapfen (25) aufweist, wobei die Zapfen (25) in an dem Halteelement (5) ausgebildete Führungen (26) eingreifen, so daß das Halteelement (5) je nach Drehrichtung der Hebel (23) relativ zum Gehäuse (4) bewegt wird.

6. Behältnis nach Anspruch 5, **dadurch gekennzeichnet**, daß die Hebel (23) jeweils mit einer Fugenabdeckung (30) versehen sind, deren Oberseite in der Offenlage des Deckels (8) parallel und auf gleicher Höhe zur Sichtfläche (14) des Halteelements (5) verläuft.

7. Behältnis nach einem der Ansprüche 1 bis 6, **dadurch gekennzeichnet**, daß mindestens einer der Hebel (23) ein Verzahnungssegment (33) aufweist, das mit einer Siliconbremse (32) kämmt.

8. Behältnis nach einem der Ansprüche 1 bis 7, **dadurch gekennzeichnet**, daß das Halteelement (5) mindestens eine Ausnehmung (6) zur Aufnahme eines im wesentlichen rechteckigen Gegenstände (3) aufweist, die breiter sowie länger als der jeweilige aufzunehmende Gegenstand (3) ist, wobei der Ausnehmung (6) jeweils ein Mitnehmerelement (39) zugeordnet ist, das an dem aufgenommenen Gegenstand (3) derart angreift, daß der aufgenommene Gegenstand (3) mit einem Eckabschnitt aus der Ausnehmung (6) herausschwenkt, wenn sich das Halteelement (5) in Richtung der Schließlage des Deckels (8) bewegt.

9. Behältnis nach Anspruch 8, **dadurch gekennzeichnet**, daß das Halteelement (5) mit mehreren nebeneinander angeordneten Ausnehmungen (6) zur Aufnahme jeweils eines im wesentlichen rechteckigen Gegenstandes (3) versehen ist, wobei die Mitnehmerelemente so angeordnet sind, daß mindestens zwei aufgenommene Gegenstände (3) an entgegengesetzten Ecken angehoben werden, wenn sich das Halteelement (5) in Richtung der Schließlage des Deckels (8) bewegt.

10. Behältnis nach Anspruch 8 oder 9, **dadurch gekennzeichnet**, daß der Ausnehmung (6) aufeinander zulaufende Führungselemente (38) zur Ausrichtung des aufzunehmenden Gegenstandes (3) zugeordnet sind.

11. Behältnis nach einem der Ansprüche 1 bis 10, **dadurch gekennzeichnet**, daß das Halteelement (5) in Gleitführungen (27,28,29) des Gehäuses (4) verschiebbar gelagert ist.

12. Behältnis nach einem der Ansprüche 1 bis 11, **dadurch gekennzeichnet**, daß das Halteelement (5) mehrere Ausnehmungen (6) zur Aufnahme von Münzen (2) aufweist.
